# NEUE EUROPÄISCHE PATENTSCHRIFT

(11) **EP 1 660 365 B2**
(45) Veröffentlichungstag und Bekanntmachung des Hinweises auf die Entscheidung über den Einspruch: **12.01.2011**
(45) Hinweis auf die Patenterteilung: 07.05.2008
(21) Anmeldenummer: 04741071.7
(22) Anmeldetag: 16.07.2004
(51) Int. Cl.: B62D 53/08

(54) **SATTELKUPPLUNG MIT DIEBSTAHLSICHERUNG**
FIFTH WHEEL WITH ANTI-THEFT PROTECTION DEVICE
SELLETTE D'ATTELAGE EQUIPEE D'UN DISPOSITIF ANTIVOL

(30) Priorität: 03.09.2003 DE 10341019
(43) Veröffentlichungstag der Anmeldung: 31.05.2006
(73) Patentinhaber: SAF-HOLLAND Verkehrstechnik GmbH, 78224 Singen-Hohentwiel (DE)
(72) Erfinder: BÜTTNER, Siegfried, 78224 Singen (DE)
(74) Vertreter: Bauer, Clemens
(86) Internationale Anmeldenummer: PCT/EP2004/007908
(87) Internationale Veröffentlichungsnummer: WO 2005/028290

(56) Entgegenhaltungen:
- EP-A- 0 051 464
- EP-A- 0 706 918
- WO-A2-03/043838
- BR-A- PI9 901 143
- DE-A- 3 803 931
- DE-A- 10 159 503
- DE-A- 19 516 101
- DE-A- 19 840 007
- US-B1- 3 876 239

## Beschreibung

Die Erfindung bezieht sich auf eine Sattelkupplung umfassend eine Kupplungsplatte und eine Diebstahlsicherung.

Im Kraftfahrzeugbau werden Sattelkupplungen verwendet um Sattelschlepper mit Anhänger zu einer Sattelschlepperkombination zu verbinden. Die Sattelkupplung besteht aus einer Kupplungsplatte am Zugfahrzeug und einem Königszapfen am Anhänger. In die Kupplungsplatte ist eine Aufnahmeöffnung zur Aufnahme des Königszapfens ausgebildet. Im angekuppelten Zustand wird der Königszapfen in die Aufnahmeöffnung von einem Verschlussmechanismus lösbar festgehalten. Der Verschlussmechanismus wird zur Erhöhung der Sicherheit im Verkehr verriegelt und die Verriegelung wird mit Anzeigen in der Fahrzeugkabine überwacht. In den letzten Jahren werden vermehrt beladene und im angekuppeltem Zustand abgestellte Sattelschlepperkombinationen gestohlen. Die mechanische Verriegelung wird mit Gewalt aufgebrochen, die Kupplung wird ausgekuppelt und der Anhänger wird mit einem fremden Zugfahrzeug widerrechtlich abgeschleppt.

Aus der DE 19516101 A1 ist eine Diebstahlsicherung für einen angekuppelten Sattelauflieger bekannt. Die Diebstahlsicherung besteht aus einem Stössel, der entgegen einer Federkraft in einem Rohrkörper auf den Verschlussmechanismus unterhalb der Kupplungsplatte einwirkt und mit einem Zylinderschloss abgeschlossen und von Hand betätigt werden kann. Das Zylinderschloss ist von Aussen einsehbar und es kann erkannt werden, wo sich die Diebstahlsicherung befindet.

Ausgehend von diesem Stand der Technik ist es Aufgabe der Erfindung, eine Sattelkupplung mit Diebstahlsicherung anzugeben, die automatisch verriegelbar ist und die nur unter einem relativ grossen Zeitaufwand zerstört werden kann.

Diese Aufgabe wird durch eine Sattelkupplung nach Anspruch 1 gelöst.

Bevorzugte Weiterbildungen der Erfindung ergeben sich aus den abhängigen Ansprüchen.

Es ist ein Vorteil der Erfindung, dass von Aussen nicht sichtbar ist, wo sich die Diebstahlsicherung befindet. Dies wird dadurch erreicht, dass die Diebstahlsicherung in einem Gehäuse unterhalb der Kupplungsplatte angeordnet ist. Dies wird auch dadurch erreicht, dass das Gehäuse aus einem Guss mit der Kupplungsplatte ausgebildet ist.

Es ist auch von Vorteil, dass für die Bedienung der Diebstahlsicherung kein Schlüssel erforderlich ist. Von Aussen her ist kein Schliesszylinder ersichtlich und es kann nicht einfach beurteilt werden, ob und wo eine Diebstahlsicherung eingebaut wurde. Dies wird dadurch erreicht, dass das Verriegelungsteil zusammenwirkend mit einem Elektromagnet ausgebildet ist.

Es ist weiter auch von Vorteil, dass die Bedienung der Diebstahlsicherung möglichst einfach ist. Dies wird dadurch erreicht, dass der Elektromagnet mit einem Steuerungsgerät in der Fahrerkabine eines Zugfahrzeuges verbindbar angeordnet ist. Dies wird auch dadurch erreicht, dass der Elektromagnet durch Eingabe eines Zahlencodes am Steuerungsgerät elektrisch betätigbar ausgebildet ist.

Ein Ausführungsbeispiel der Erfindung wird anhand der Figuren beschrieben. Es zeigen:
Figur 1 eine Sicht auf eine erfindungsgemässe Sattelkupplung mit Diebstahlsicherung und Steuerungsgerät und
Figur 2 eine Sicht auf die Sattelkupplung von Figur 1.

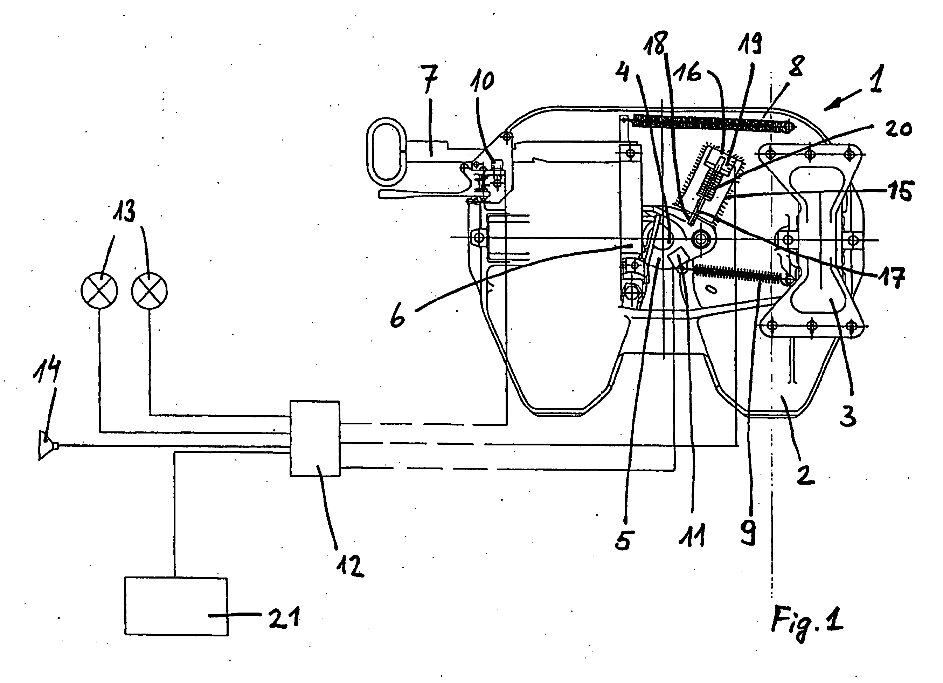

In Figur 1 ist eine Sattelkupplung 1 mit einer Diebstahlsicherung 16 schematisch dargestellt. Figur 1 zeigt eine Kupplungsplatte 2 einer nicht dargestellten Sattelschlepperkombination in der Ansicht von Unten. Die Kupplungsplatte 2 ist mittels Lagerböcke 3, von denen hier nur einer dargestellt ist, und Lagerschalen beschränkt bewegbar an dem Zugfahrzeug verbunden. In der Mitte der Kupplungsplatte 2 ist eine Aufnahmeöffnung 4 für einen nicht dargestellten Königszapfen eines Anhängers ersichtlich.

Der Königszapfen wird in der Aufnahmeöffnung 4 festgehalten durch einen Verschlussmechanismus 5,6, der im Wesentlichen aus einem bewegbaren Schlossteil 5 und einem bewegbaren Riegelteil 6 besteht. Das Riegelteil 6 kann von einer Handhebelstange 7 betätigt werden. Das Riegelteil 6 und das Schlossteil 5 werden durch Zugfedern 8,9 in Schliessstellung gehalten.

Die Sattelkupplung 1 weist weiterhin Sensoren 10,11 zur Überwachung der Stellung der Handhebelstange 7 und des Schlossteiles 5 auf. Die Sensoren 10, 11 sind über elektrische Leitungen mit einem Steuerungsgerät 12 verbunden. In der Fahrerkabine sind Signalgeber angeordnet, die den Fahrer informieren über die Signale vom Steuerungsgerät 12. Die Signalgeber können als optische Anzeigen 13 und/oder akustische Warnsignalgeber 14 ausgebildet sein.

Auf der Unterseite der Kupplungsplatte 2 ist ein Gehäuse 15 dargestellt. Das Gehäuse 15 ist in einem Guss mit der Kupplungsplatte 2 hergestellt. Im Gehäuse 15 ist die erfindungsgemässe Diebstahlsicherung 16 angeordnet. Aus dem Gehäuse 15 ragt ein Verriegelungsteil 17 heraus, das mit dem herausragenden Bereich in eine Aussparung 18 am Schlossteil 5 passend aufgenommen wird.

Das Verriegelungsteil kann beispielsweise als ein Bolzen 17, eine Klaue oder ein Haken ausgebildet sein. Im Gehäuse 15 sind weiterhin eine Druckfeder 20 und ein Elektromagnet 19 angeordnet. Die Feder 20 bewirkt, dass der Bolzen 17 im stromlosen Zustandes der Diebstahlsicherung 16 aus dem Gehäuse 15 hinaus in die Aussparung 18 am Schlossteil 5 gedrückt wird. Der Elektromagnet 19 bewirkt, dass der Bolzen 17 durch einen elektrischen Impuls aus dem Steuerungsgerät 12 aus der Aussparung 18 gezogen wird. Das Gehäuse 15 und insbesondere der Bolzen 17 sind derart benachbart zum Schlossteil 5 angeordnet, dass die Diebstahlsicherung 16 zumindest im geschlossenen Zustand der Sattelkupplung 1 eine homogene Einheit mit dem Schlossteil 5 bildet und somit für ein Einbruchswerkzeug keine Angriffspunkte anbietet.

Mit dem Steuerungsgerät 12 ist auch ein Codiergerät 21 verbunden. Im Codiergerät 21 wird ein Zahlencode eingegeben und verglichen mit einem gespeicherten, vorgegebenen Wert. Bei Übereinstimmung wird das Steuerungsgerät 12 einen elektrischen Impuls zur Betätigung des Elektromagneten 19 abgeben und der Bolzen 17 wird durch Anzug des Elektromagneten 19 gelöst. Der Zahlencode oder ein Teil davon kann auch statt dem Fahrer nur dem Empfänger der Ladung am Zielort des Sattelschleppers bekannt gegeben werden. Hiermit wird verhindert, dass der Fahrer unterwegs bei einem Überfall die Diebstahlsicherung 16 frei schalten kann. Die akustische Warnanzeige 14 und die Signallampen oder optischen Anzeigen 13 geben dem Fahrer alle notwendigen Informationen über das Funktionieren der Diebstahlsicherung 16 und gegebenenfalls auch über einen versuchten Diebstahl.

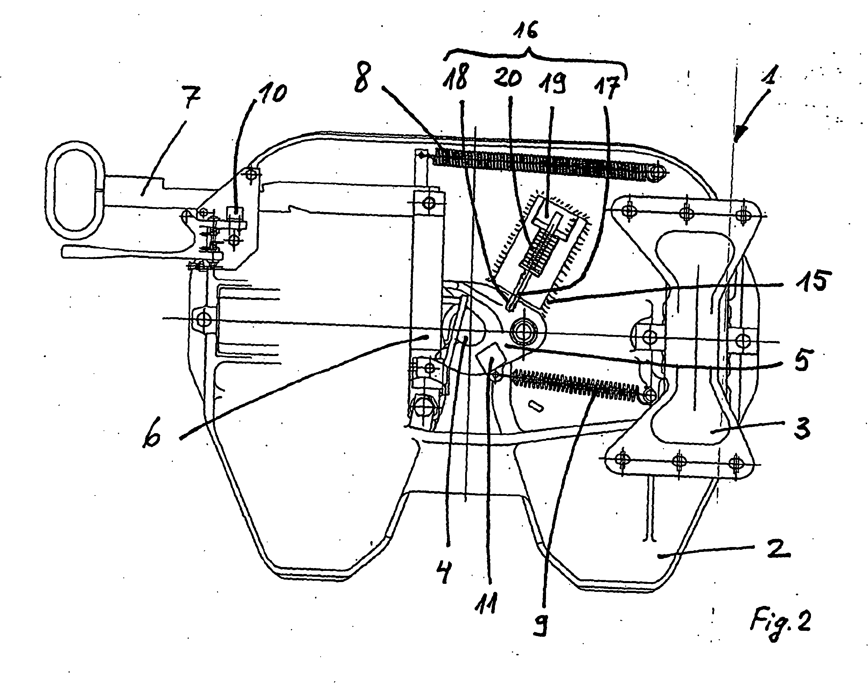

In Figur 2 ist die Sattelkupplung 1 von Figur 1 alleine, d.h. ohne elektrischen Leitungen und Geräten, dargestellt. Gleiche Bezugszeichen beziehen sich auf gleichen Merkmalen. Das Gehäuse 15 kann auch an einer anderen Stelle der Kupplungsplatte 2 ausgebildet werden, beispielsweise derart, dass anstelle des Schlossteils 5 das Riegelteil 6 oder beide Teile 5,6 mit der Diebstahlsicherung 16 gesichert wird oder werden.

Mit der hier vorgeschlagenen Diebstahlsicherung 16 ist die Sattelkupplung 1 vor unbefugten Manipulationen geschützt. Die Diebstahlsicherung 16 ist von Aussen nicht erkennbar und bietet, weil in einem Gehäuse 15 als integraler Teil der Kupplungsplatte 2 untergebracht, einen länger dauernden Schutz gegen Einbruchversuche als bei einem von Aussen sichtbaren Schliesszylinder. Ein mechanisches Lösen der Verbindung zwischen Zugfahrzeug und Anhänger einer Sattelschlepperkombination ist durch diese Sattelkupplung mit elektrischer Diebstahlsicherung praktisch nicht mehr möglich.

## Patentansprüche

1. Sattelkupplung (1) umfassend eine Kupplungsplatte (2) und eine Diebstahlsicherung (16), die einstückig mit der Kupplungsplatte (2) verbunden und elektrisch betätigbar ausgebildet ist, **dadurch gekennzeichnet, dass** die Diebstahlsicherung (16) in einem Gehäuse (15) unterhalb der Kupplungsplatte (2) und von Aussen nicht erkennbar angeordnet ist und dass die Diebstahlsicherung (16) ein aus dem Gehäuse (15) herausragendes Verriegelungsteil (17) aufweist, das passend zu einer Aufnahme (18) in einem Schlossteil (5) der Sattelkupplung ausgebildet ist, wobei das Gehäuse (15) aus einem Guss mit der Kupplungsplatte (2) ausgebildet ist, und eine Feder (20) vorgesehen ist, um das Verriegelungsteil (17) im stromlosen Zustand der Diebstahlsicherung (16) aus dem Gehäuse (15) hinaus in die Aufnahme (18) zu drücken.

2. Sattelkupplung nach Anspruch 1, **dadurch gekennzeichnet, dass** das Verriegelungsteil (17) zusammenwirkend mit einem Elektromagnet (19) ausgebildet ist.

3. Sattelkupplung nach mindestens einem der Ansprüche 1 bis 2, **dadurch gekennzeichnet, dass** der Elektromagnet (19) mit einem Steuerungsgerät (12) in der Fahrerkabine eines Zugfahrzeuges verbindbar angeordnet ist.

4. Sattelkupplung nach mindestens einem, der Ansprüche 1 bis 3, **dadurch gekennzeichnet, dass** der Elektromagnet (19) durch Eingabe eines Zahlencodes am Steuerungsgerät (12) elektrisch betätigbar ausgebildet ist.

5. Sattelkupplung nach mindestens einem der Ansprüche 1 bis 4, **dadurch gekennzeichnet, dass** mit dem Steuerungsgerät (12) Sensoren (10,11) und Anzeigen (13,14) zur Überwachung der Sattelkupplung (1) verbindbar angeordnet sind.

## Claims

1. Fifth wheel (1) comprising a coupling plate (2) and an anti-theft protection device (16) which is configured such that it is integrally connected to the coupling plate (2) and can be electrically actuated, **characterized in that** the anti-theft protection device (16) being arranged such that it is not discernible from the outside and is disposed in a housing (15) beneath the coupling plate (2) and **in that** the anti-theft protection device (16) has a locking part (17) which projects from the housing (15) and which is configured such that it fits a receiving fixture (18) in a lock part (5) of the fifth wheel, wherein the housing (15) is formed from a casting with the coupling plate (2), and a spring (20) is provided in order to press the locking part (17) in the currentless state of the anti-theft device (16) out of the housing (15) into the receiving fixture (18).

2. Fifth wheel according to claim 1, **characterized in that** the locking part (17) is configured so as to interact with an electromagnet (19).

3. Fifth wheel according to at least one of claims 1 to 2, **characterized in that** the electromagnet (19) is arranged such that it is connectable to a control unit (12) in the driver's cab of a tractor.

4. Fifth wheel according to at least one of claims 1 to 3, **characterized in that** the electromagnet (19) is configured such that it can be electrically actuated by the inputting of a numerical code at the control unit (12).

5. Fifth wheel according to at least one of claims 1 to 4, **characterized in that** sensors (10, 11) and displays (13, 14) for monitoring the fifth wheel (1) are arranged such that they are connectable to the control unit (12).

## Revendications

1. Accouplement de remorque (1) qui comprend une plaque d'accouplement (2) et une protection antivol (16) reliée d'un seul tenant à la plaque d'accouplement (2) et qui peut être actionnée électriquement, **caractérisé en ce que** la protection antivol (16) est disposée dans un boîtier (15) situé en dessous de la plaque d'accouplement (2) et pas discernable d'en dehors, et **en ce que** la protection antivol (16) présente une pièce de verrouillage (17) qui déborde du boîtier (15) et qui a une forme complémentaire d'un logement (18) ménagé dans une pièce de serrure (5) de l'accouplement de remorque (1), dans lequel le boîtier (15) est formé par moulage en même temps que la plaque d'accouplement (2), et un ressort (20) est prévu pour presser la pièce de verrouillage (17) dans l'état sans courant de la protection antivol (16) en dehors du boîtier (15) dans le logement (18).

2. Accouplement de remorque selon la revendication 1, **caractérisé en ce que** la pièce de verrouillage (17) est formée de manière à coopérer avec un électroaimant (19).

3. Accouplement de remorque selon au moins l'une des revendications 1 à 2, **caractérisé en ce que** l'électroaimant (19) est disposé de manière à pouvoir être relié à un appareil de commande (12) installé dans la cabine du conducteur du véhicule tracteur.

4. Accouplement de remorque selon au moins l'une des revendications 1 à 3, **caractérisé en ce que** l'électroaimant (19) est configuré de manière à pouvoir être actionné électriquement par l'introduction d'un code chiffré dans l'appareil de commande (12).

5. Accouplement de remorque selon au moins l'une des revendications 1 à 4, **caractérisé en ce que** des détecteurs (10, 11) et des affichages (13, 14) de surveillance de l'accouplement de remorque (1) sont disposés de manière à pouvoir être reliés à l'appareil de commande (12).
